(19) Europäisches Patentamt
European Patent Office
Office européen des brevets

(11) **EP 1 445 239 B1**

(12) **EUROPÄISCHE PATENTSCHRIFT**

(45) Veröffentlichungstag und Bekanntmachung des Hinweises auf die Patenterteilung:
**22.06.2005 Patentblatt 2005/25**

(51) Int Cl.$^7$: **C02F 1/20**, C02F 3/12

(21) Anmeldenummer: **03002766.8**

(22) Anmeldetag: **07.02.2003**

(54) **Verfahren zur Beeinflussung des Schlammvolumenindex mit dem Ziel der Schwimmschlammvermeidung auf Kläranlagen**

Process to influence the sludge volume index for reducing floating sludge in sewage works

Procédé pour influencer l'indice du volume de la boue pour réduire les boues flottantes dans une station d'épuration

(84) Benannte Vertragsstaaten:
**AT BE BG CH CY CZ DE DK EE ES FI FR GB GR HU IE IT LI LU MC NL PT SE SI SK TR**

(43) Veröffentlichungstag der Anmeldung:
**11.08.2004 Patentblatt 2004/33**

(73) Patentinhaber:
- **Delphin Umwelttechnik GmbH**
  **21079 Hamburg (DE)**
- **WTE Wassertechnik GmbH**
  **45136 Essen (DE)**

(72) Erfinder:
- **Plass, Rainer Dr.**
  **22301 Hamburg (DE)**

- **Brinke-Seiferth, Stephan Dr.**
  **22607 Hamburg (DE)**
- **Schröder, Reinhard Dr.**
  **45239 Essen (DE)**
- **Wotrubez, Herbert Dipl. Ing.**
  **65552 Limburg (DE)**

(74) Vertreter: **Fleck, Thomas, Dr. Dipl.-Chem.**
**Raffay & Fleck**
**Patentanwälte**
**Geffckenstrasse 6**
**20249 Hamburg (DE)**

(56) Entgegenhaltungen:
| | |
|---|---|
| DE-A- 2 337 999 | DE-A- 2 922 828 |
| DE-A- 4 110 026 | DE-A- 19 644 080 |
| US-A- 3 960 717 | US-A- 3 980 556 |

**Beschreibung**

Die Erfindung betrifft ein Verfahren zur biologischen Abwasserreinigung, wie es im Oberbegriff des Anspruches 1 angeführt ist.

Ein derartiges Verfahren ist aus der DE 196 44 080 A1 und der DE 29 22 828 A bekannt. Diese vorbekannten Lehren beschreiben Verfahren zur biologischen Abwasserreinigung, in denen eine Schlammflotation im Nachklärbecken dadurch vermieden wird, daß durch die Erhöhung des Sauerstoffeintrags in dem Belebungsbecken eine Obersättigung des Flüssigkeits-Schlamm-Gemisches mit gasförmigen Stoffwechselprodukten wie Stickstoff und $CO_2$ verhindert wird. Die Zugabe von $O_2$-haltigem Gas zur Strippung von $N_2$ erfolgt in der Weise, daß der $O_2$-Gehalt am Ausgang der Belebungsstufe zwischen 1 und 2 ppm liegt. In der zweitgenannten Vorveröffentlichung wird vorgeschlagen, die Menge des Strippgases nach der Menge des auszustrippenden $N_2$ zu richten.

In genereller Hinsicht gehören Belebungsbecken und Nachklärbecken zu Kläranlagen, in denen das sehr gängige Belebtschlammverfahren als biologisches Reinigungsverfahren gewählt wurde. In Belebungsbecken wird der Schlamm, der in erster Linie aus Mikroorganismen besteht, die das Abwasser reinigen, durch Belüften und/oder Rühren in Schwebe gehalten, während das Nachklärbecken zum Absetzen und damit zum Abscheiden des Schlammes vom gereinigten Wasser dient.

Der Schlammvolumenindex ist ein Maß für die Absetzbarkeit eines Schlamm-Wasser-Gemisches. Je besser der Schlamm absetzbar ist, desto kleiner kann ein Nachklärbecken sein, was ein großes Einsparpotential bezüglich der Investitionskosten beim Kläranlagenneubau bietet bzw. desto höher kann der Zulauf zum vorhandenen Nachklärbecken sein, ohne daß die Güte der Ablaufwerte gefährdet wäre und desto höher kann die Trockensubstanzmenge (Mikroorganismen) im Belebungsbecken sein, was eine erhöhte Reinigungsleistung ermöglicht.

Sich schlecht absetzender Schlamm (gekennzeichnet durch einen hohen Schlammvolumenindex) birgt die Gefahr, daß Schlamm mit aus der Kläranlage herausgespült wird und den Vorfluter unnötig mit Nähr- und/oder Giftstoffen belastet. Hohe Schlammvolumenindices stehen für auftreibenden Schlamm, der als "Schwimmschlamm" bezeichnet wird.

Eine Veränderung der Stickstoffkonzentration bewirkt eine Veränderung des Absetzverhaltens / Schlammvolumenindex. Eine Verringerung der Stickstoffkonzentration geht dabei mit einer Verringerung des Schlammvolumenindex und damit mit einer besseren Absetzbarkeit einher.

Verfahren, deren Ziel die Vermeidung von Schwimmschlamm ist, liegt folgende Erkenntnis zugrunde: In Belebungsbecken (Becken, in denen die biologische Reinigung nach dem Belebtschlammverfahren stattfindet) herrscht in der Regel eine Übersättigung mit dem Gas Stickstoff, wenn der für die Mikroorganismen erforderliche Sauerstoff über Luft in das Becken eingebracht wird. Die Luft enthält fast 80 % Stickstoff und nur ca. 20 % Sauerstoff. Durch diesen Stickstoffeintrag, insbesondere in tiefe Belebungsbecken sowie durch Stickstoff, der zusätzlich bei der Denitrifikation entsteht, kommt die Übersättigung mit Stickstoff zustande. Eine Übersättigung mit Gas, wie hier mit Stickstoff, hat einen Einfluß auf die Absetzeigenschaften des Schlammes im nachfolgenden Nachklärbecken, in dem sich der Schlamm absetzen soll: Das Absetzen wird erschwert. Je tiefer die Belebungsbecken sind, desto höher ist der Grad der Übersättigung. Tiefere Belebungsbecken werden aufgrund von erforderlichen Platzeinsparungen immer häufiger gebaut.

Daß der Stickstoff einen Einfluß auf die Absetzeigenschaften des Schlammes hat, ist schon allein an der Tatsache sichtbar, daß bei Begasung der Belebungsbecken mit reinem Sauerstoff anstelle von Luft die Schlammvolumenindices in Bereichen liegen, in denen kein Schwimmschlamm auftritt.

Für Verfahren mit dem Ziel der Schwimmschlammvermeidung ist es Stand der Technik, bei Kläranlagen, deren biologische Reinigung nach dem Prinzip des Belebtschlammverfahrens geschieht, flache Entgasungsgräben oder Überfallwehre zwischen Belebungsbecken und Nachklärbecken zu schalten. Diese Verfahren sind teilweise flächenintensiv und nur bis zu einem gewissen Grad wirksam, jedoch die in der Praxis bisher am häufigsten gebräuchlichen Verfahren. Nach dem Stand der Technik werden die beschriebenen Verfahren "blind" benutzt, d.h. die Veränderung der Stickstoffkonzentration kann nicht mittels einer Messung überprüft werden, so daß in der Regel ein größerer Aufwand als eigentlich nötig betrieben wird, um die Stickstoffkonzentration sicher in einen Bereich zu bringen, in dem Schwimmschlamm nicht mehr auftritt (unterhalb der Sättigungskonzentration).

Der Erfindung liegt deshalb die Aufgabe zugrunde, das eingangs beschriebene Verfahren derart zu verbessern, daß es ohne großen konstruktiven Aufwand ein sicheres und wirtschaftlicheres Absetzen von Schlamm im Nachklärbecken gewährleistet.

Diese Aufgabe wird erfindungsgemäß durch das im Anspruch 1 gekennzeichnete Verfahren gelöst.

Im Gegensatz zum Stand der Technik ist beim erfindungsgemäßen Verfahren die Verringerung der Stickstoffkonzentration quantifizierbar mit Hilfe des Einsatzes einer N2-Sonde, deren Meßverfahren beispielsweise nach dem DE-Patent Nr. 199 06 392 geschützt ist.

Mit Hilfe der Sauerstoffbegasung im Rahmen des erfindungsgemäßen Verfahrens wird Stickstoff ($N_2$) aus dem Gemisch herausgetrieben (gestrippt). Je tiefer die Belebungsbecken, desto höher fällt der vorhandene Grad an Übersättigung mit Stickstoff aus. Sauerstoff ist das einzige Gas, das für diese Erfindung infrage kommt, weil es im Gegensatz zu anderen Gasen von den Mikroorganismen im Belebtschlamm direkt veratmet/verbraucht wird und so auf diese Weise wieder aus dem Wasser-Schlamm-Gemisch eliminiert wird und nicht seinerseits für schlechte Absetzeigenschaften des Schlammes sorgt.

Das erfindungsgemäße Verfahren ist also wirtschaftlicher, weil nur exakt die Maßnahmen vorgenommen werden, die meßbar und erforderlich sind, um ein bestimmtes Ziel zu erreichen. Um z.B. Schwimmschlamm zu vermeiden, reicht es aus, die Stickstoffkonzentration in einen Bereich zu bringen, der gerade unterhalb der Sättigungskonzentration liegt und nicht mehr, wie es aus Gründen der notwendigen Betriebssicherheit bei gleichzeitiger Unsicherheit bezüglich der Wirksamkeit der vorgenommenen Maßnahmen bisher der Fall sein mußte. Andererseits kann auch bewußt und gezielt mehr oder weniger weit unter die Sättigungskonzentration von Stickstoff gegangen werden, wenn z.B. wilde Denitrifikation im Nachklärbecken erwartet werden kann. Wilde Denitrifikation im Nachklärbecken beginnt in der Regel erst nach längerer Aufenthaltszeit im Nachklärbecken und führt zur Stickstoffgasbildung. Dieser Stickstoff löst sich im Inhalt des Nachklärbekkens, und zu vermeiden ist, daß es dadurch zu einer erneuten Übersättigung kommt. Die Senkung weit unter die Sättigungskonzentration stellt somit eine Art Puffer dar. Eine längere Aufenthaltszeit im Nachklärbecken kann erforderlich sein für eine bessere Eindickung des abgesetzten Schlammes (höherer Trockensubstanzgehalt).

Eine feinblasige Belüftung ist vorteilhaft, da diese den Wirkungsgrad und damit den Sauerstoffeintrag bzw. Stickstoffaustrag positiv beeinflußt.

Je nach Durchflußmenge bzw. Aufenthaltszeit des Wassers im Belebungsbecken ist im Einzelfall zu ermitteln, welche Menge Sauerstoff auf diesem Wege in das Becken einzubringen ist, um die Absetzeigenschaften des Schlamm-Wasser-Gemisches dahingehend zu beeinflussen, daß Schwimmschlamm sicher vermieden werden kann.

Weitere Vorteile und Merkmale gehen aus den Unteransprüchen hervor, die auch gemeinsam mit dem Hauptanspruch von erfinderischer Bedeutung sein können. Im folgenden wird ein Ausführungsbeispiel anhand der Zeichnung zum besseren Verständnis der Erfindung näher erläutert. Es zeigt:

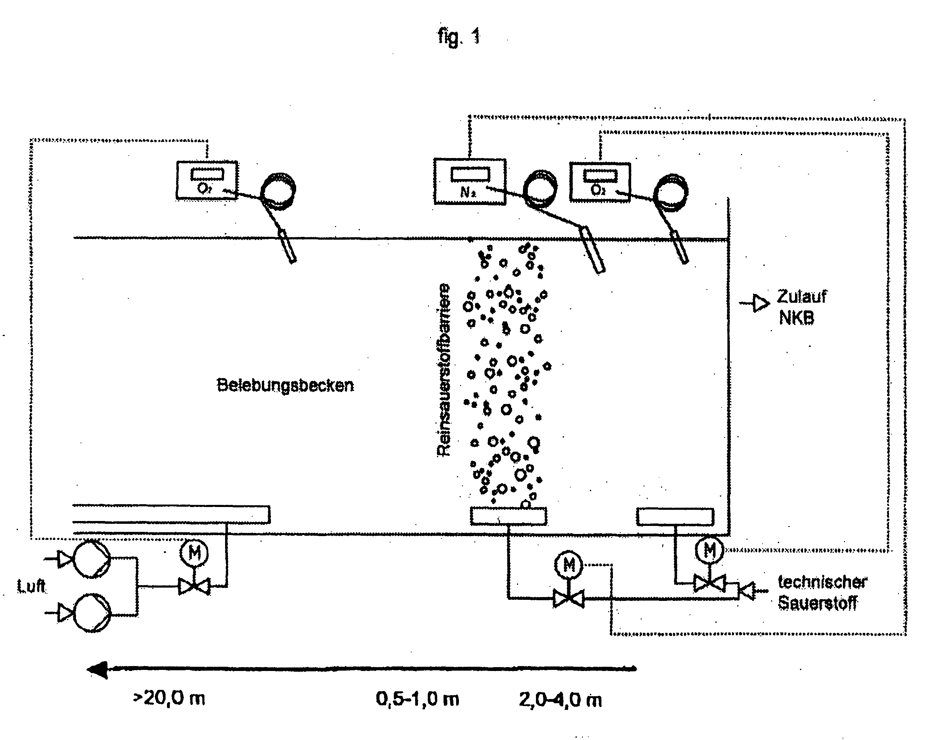

Fig. 1    eine schematische Querschnittsansicht durch ein Belebungsbecken, in dem das erfindungsgemäße Verfahren durchgeführt werden kann.

Beispiele:

Je nach Wassertiefe im Belebungsbecken und Wassertemperatur können die Stickstoffkonzentration, die Sättigungskonzentration von Stickstoff sowie die zu entfernende Menge Stickstoff aus dem Wasser-Schlamm-Gemisch große Unterschiede aufweisen.

In der untenstehenden Tabelle werden für zwei verschiedenen Temperaturen für jeweils drei Wassertiefen die erwartete Stickstoffkonzentration, die Sättigungs-konzentration sowie die zu entfernende Stickstoffkonzentration ermittelt.

Die erwartete Stickstoffkonzentration ist das Produkt aus Sättigungskonzentration bei Umgebungsdruck und herrschendem Druck im Becken in [bar](Umgebungsdruck in [bar] plus Produkt aus halber Beckentiefe in [m] und 0,1 in [bar/m]).

Die vorhandenen Konzentrationen sind aufgrund des im Becken vorhandenen hydrostatischen Druckes jeweils höher als die Sättigungskonzentrationen unter Umgebungsdruck (ca. 1 bar). In der folgenden Tabelle ist die aus dem Schlamm-WasserGemisch Konzentration an Stickstoff aufgeführt, die entfernt werden muß, um die Stickstoffkonzentration auf eine Konzentration zu bringen, die der Sättigungskonzentration entspricht. Ist nur so viel Stickstoff vorhanden wie es der Sättigungskonzentration entspricht, so kann von guten Absetzeigenschaften ausgegangen werden. Eine weitere Reduktion unterhalb die Sättigungskonzentration kann sinnvoll sein, wenn im Nachklärbecken Prozesse erwartet werden, die zu einer weiteren $N_2$-Produktion führen (Denitrifikation). In dem Fall wäre die zu entfernende Konzentration noch größer als die in der Tabelle angegebenen Werte.

| Wassertiefe [m] | $CN_2,erw = CN_2,sätt + 0,1 \cdot \dfrac{Tiefe}{2}$ | 5°C Wassertemperatur $c_{N2,Sätt.}=20,5$ mg/l | 15°C Wassertemperatur $c_{N2,sätt}=16,9$ mg/l |
|---|---|---|---|
| 5 | $c_{N2}$ (Stickstoffkonzentration) [mg/l] | 25,6 | 21,1 |
|  | Grad der Übersättigung [%] | 25 | 25 |
|  | zu entfernende Konzentration $N_2$ [mg/l] | **5,1** | **4,2** |
| 10 | $c_{N2}$ (Stickstoffkonzentration) [mg/l] | 30,8 | 25,4 |
|  | Grad der Übersättigung [%] | 50 | 50 |
|  | zu entfernende Konzentration $N_2$ [mg/l] | **10,3** | **8,5** |
| 20 | $c_{N2}$ (Stickstoffkonzentration) [mg/l] | 41 | 33,8 |
|  | Grad der Übersättigung [%] | 100 | 100 |
|  | zu entfernende Konzentration $N_2$ [mg/l] | **20,5** | **16,9** |

**Patentansprüche**

1. Verfahren zur biologischen Abwasserreinigung in einer Kläranlage mit einem Wasser-Belebtschlamm-Gemisch im Belebungsbecken, bei dem das Gemisch oder ein Teil desselben vor Eintritt in ein Nachklärbecken mit reinem Sauerstoff oder sauerstoffangereicherter Luft begast wird, **dadurch gekennzeichnet, daß** die Stickstoff-Konzentration im Wasser-Belebtschlamm-Gemisch durch Ausgasen auf eine beliebige Konzentration gebracht wird, die unterhalb der Sättigungskonzentration liegt, und daß man die Stickstoffkonzentration im Belebungsbekken kontinuierlich hinter einer Sauerstoffbarriere mißt, und daß die Verweil- bzw. Durchflußzeit in dem zwischen der Sauerstoffbarriere und dem Zulauf in das Nachklärbekken liegenden Bereich derart gesteuert wird, daß eine Sättigungs- oder Untersättigungskonzentration für Sauerstoff unter den gegebenen Umgebungsbedingungen vorliegt.

2. Verfahren nach Anspruch 1, **dadurch gekennzeichnet, daß** durch Ausgasen von Stickstoff eine Stickstoffkonzentration im Zulauf des Nachklärbeckens von 15 bis 25 mg/l entsteht.

3. Verfahren nach Anspruch 1 und 2, **dadurch gekennzeichnet, daß** nur ein Teilstrom, der in das Nachklärbecken gelangt, die Sauerstoffbarriere passiert.

4. Verfahren nach Anspruch 1 bis 3, **dadurch gekennzeichnet, daß** man die Stickstoffkonzentration im Belebungsbecken kontinuierlich vor und hinter der Sauerstoffbarriere mißt.

**Claims**

1. Method for biological sewage treatment in a sewage treatment plant with a water-activated sludge mixture in the activation tank, in which the mixture or part thereof is gassed with pure oxygen or oxygen-enriched air before entering the secondary sedimentation tank, **characterized in that** the nitrogen concentration in the water-activated sludge mixture is brought to a random concentration below the saturation concentration by gassing out and that the nitrogen concentration in the activation tank is measured continuously behind an oxygen barrier and that the residence or flow time in the area between the oxygen barrier and the feed into the secondary sedimentation tank is controlled in such a way that there is a saturation or subsaturation concentration for oxygen under the given ambient conditions.

2. Method according to claim 1, **characterized in that** as a result of the gassing out of nitrogen there is a nitrogen concentration of 15 to 25 mg/l in the feed of the secondary sedimentation tank.

3. Method according to claim 1 and 2, **characterized in that** only a partial flow entering the secondary sedimentation tank passes the oxygen barrier.

4. Method according to claims 1 to 3, **characterized in that** the nitrogen concentration in the secondary sedimentation tank is continuously measured in front of and behind the oxygen barrier.

**Revendications**

1. Procédé d'épuration biologique des eaux d'égout dans une station d'épuration avec un mélange d'eau et de boue activée dans des bassins d'activation, dans lequel le mélange ou une partie du mélange reçoit un courant gazeux d'oxygène pur ou d'air enrichi en oxygène avant son entrée dans un décanteur secondaire, **caractérisé en ce que** la concentration en azote dans le mélange d'eau et de boue activée est ajustée par dégazage à une concentration quelconque qui est en dessous de la concentration de saturation,
   et **en ce qu'**on mesure en continu la concentration en azote dans le bassin d'activation en arrière d'une barrière d'oxygène,
   et **en ce qu'**on règle le temps de séjour ou de passage dans la zone située entre la barrière d'oxygène et l'admission au décanteur secondaire de manière qu'il existe une concentration de saturation ou de sous-saturation pour l'oxygène dans les conditions ambiantes données.

2. Procédé suivant la revendication 1, **caractérisé en ce que** l'élimination d'azote gazeux crée une concentration en azote de 15 à 25 mg/l dans l'alimentation du décanteur secondaire.

3. Procédé suivant la revendication 1 et 2, **caractérisé en ce qu'**un courant partiel qui accède au décanteur secondaire franchit seul la barrière d'oxygène.

4. Procédé suivant la revendication 1 à 3, **caractérisé en ce qu'**on mesure en continu la concentration en azote dans le décanteur secondaire en amont et en aval de la barrière d'oxygène.

fig. 1